# EUROPEAN PATENT APPLICATION

(11) **EP 4 712 591 A2**
(43) Date of publication of application: **18.03.2026**
(21) Application number: 26155797.9
(22) Date of filing: 09.03.2023
(51) Int. Cl.: H04W 52/02

(54) **CHO CONFIGURATION FOR FAST OFFLOADING DURING CELL SHUTDOWN**

(30) Priority: 10.03.2022 US 202263318464 P
(62) Divisional of application: 23713158.6
(71) Applicant: Nokia Technologies Oy, 02610 Espoo (FI)
(72) Inventor: LASELVA, Daniela, 9270 Klarup (DK); PANTELIDOU, Anna, 92160 Antony (FR)
(74) Representative: EIP

(57) **Abstract**

Systems, methods, apparatuses, and non-transitory computer-readable medium for conditional handover configuration for fast offloading during cell shutdown. For example, a method comprises receiving, with a user equipment from a serving cell, one or more handover configurations. The one or more handover configurations comprises an energy saving conditional handover configuration. At least one of the one or more handover configurations comprises at least one of: an indication of one or more candidate target cells, or information for target cell selection. The method also comprises receiving, from the serving cell, an indication of activation of an energy saving mode at the serving cell. The method further comprises selecting a target cell, from the one or more candidate target cells, based, at least partially, on the one or more handover configurations and the received indication of activation of the energy saving mode at the serving cell.

## Description

### TECHNICAL FIELD

The example and non-limiting embodiments relate generally to network communications and, more particularly, to handover procedures.

### BACKGROUND

It is known, in network communications, to perform cell shutdown to enable energy savings.

### SUMMARY

The following summary is merely intended to be illustrative. The summary is not intended to limit the scope of the claims.

In accordance with one aspect, an apparatus comprising: at least one processor; and at least one memory including computer program code; the at least one memory and the computer program code configured to, with the at least one processor, cause the apparatus at least to: receive, from a serving cell, one or more handover configurations, wherein the one or more handover configurations comprises an energy saving conditional handover configuration, wherein at least one of the one or more handover configurations comprises at least one of: an indication of one or more candidate target cells, or information for target cell selection; receive, from the serving cell, an indication of activation of an energy saving mode at the serving cell; and select a target cell, from the one or more candidate target cells, based, at least partially, on the one or more handover configurations and the received indication of activation of the energy saving mode at the serving cell.

In accordance with one aspect, a method comprising: receiving, with a user equipment from a serving cell, one or more handover configurations, wherein the one or more handover configurations comprises an energy saving conditional handover configuration, wherein at least one of the one or more handover configurations comprises at least one of: an indication of one or more candidate target cells, or information for target cell selection; receiving, from the serving cell, an indication of activation of an energy saving mode at the serving cell; and selecting a target cell, from the one or more candidate target cells, based, at least partially, on the one or more handover configurations and the received indication of activation of the energy saving mode at the serving cell.

In accordance with one aspect, an apparatus comprising means for performing: receiving, from a serving cell, one or more handover configurations, wherein the one or more handover configurations comprises an energy saving conditional handover configuration, wherein at least one of the one or more handover configurations comprises at least one of: an indication of one or more candidate target cells, or information for target cell selection; receiving, from the serving cell, an indication of activation of an energy saving mode at the serving cell; and selecting a target cell, from the one or more candidate target cells, based, at least partially, on the one or more handover configurations and the received indication of activation of the energy saving mode at the serving cell.

In accordance with one aspect, a non-transitory computer-readable medium comprising program instructions stored thereon which, when executed with at least one processor, cause the at least one processor to: cause receiving, from a serving cell, of one or more handover configurations, wherein the one or more handover configurations comprises an energy saving conditional handover configuration, wherein at least one of the one or more handover configurations comprises at least one of: an indication of one or more candidate target cells, or information for target cell selection; cause receiving, from the serving cell, of an indication of activation of an energy saving mode at the serving cell; and select a target cell, from the one or more candidate target cells, based, at least partially, on the one or more handover configurations and the received indication of activation of the energy saving mode at the serving cell.

In accordance with one aspect, an apparatus comprising: at least one processor; and at least one memory including computer program code; the at least one memory and the computer program code configured to, with the at least one processor, cause the apparatus at least to: determine to activate an energy saving mode; generate one or more handover configurations, wherein the one or more handover configurations comprises an energy saving conditional handover configuration, wherein at least one of the one or more handover configurations comprises at least one of: an indication of one or more candidate target cells, or information for target cell selection; transmit, to a user equipment, the one or more handover configurations; initiate activation of the energy saving mode; and transmit, to the user equipment, an indication of activation of the energy saving mode.

In accordance with one aspect, a method comprising: determining to activate an energy saving mode; generating one or more handover configurations, wherein the one or more handover configurations comprises an energy saving conditional handover configuration, wherein at least one of the one or more handover configurations comprises at least one of: an indication of one or more candidate target cells, or information for target cell selection; transmitting, to a user equipment, the one or more handover configurations; initiating activation of the energy saving mode; and transmitting, to the user equipment, an indication of activation of the energy saving mode.

In accordance with one aspect, an apparatus comprising means for performing: determining to activate an energy saving mode; generating one or more handover configurations, wherein the one or more handover configurations comprises an energy saving conditional handover configuration, wherein at least one of the one or more handover configurations comprises at least one of: an indication of one or more candidate target cells, or information for target cell selection; transmitting, to a user equipment, the one or more handover configurations; initiating activation of the energy saving mode; and transmitting, to the user equipment, an indication of activation of the energy saving mode.

In accordance with one aspect, a non-transitory computer-readable medium comprising program instructions stored thereon which, when executed with at least one processor, cause the at least one processor to: determine to activate an energy saving mode; generate one or more handover configurations, wherein the one or more handover configurations comprises an energy saving conditional handover configuration, wherein at least one of the one or more handover configurations comprises at least one of: an indication of one or more candidate target cells, or information for target cell selection; cause transmitting, to a user equipment, of the one or more handover configurations; initiate activation of the energy saving mode; and cause transmitting, to the user equipment, of an indication of activation of the energy saving mode.

In accordance with one aspect, a computer program comprising instructions stored thereon for performing at least the following: receiving, from a serving cell, one or more handover configurations, wherein the one or more handover configurations comprises an energy saving conditional handover configuration, wherein at least one of the one or more handover configurations comprises at least one of: an indication of one or more candidate target cells, or information for target cell selection; receiving, from the serving cell, an indication of activation of an energy saving mode at the serving cell; and selecting a target cell, from the one or more candidate target cells, based, at least partially, on the one or more handover configurations and the received indication of activation of the energy saving mode at the serving cell.

In accordance with one aspect, a computer program comprising instructions stored thereon for performing at least the following: determining to activate an energy saving mode; generating one or more handover configurations, wherein the one or more handover configurations comprises an energy saving conditional handover configuration, wherein at least one of the one or more handover configurations comprises at least one of: an indication of one or more candidate target cells, or information for target cell selection; transmitting, to a user equipment, the one or more handover configurations; initiating activation of the energy saving mode; and transmitting, to the user equipment, an indication of activation of the energy saving mode.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a flowchart illustrating steps as described herein;
FIG. 4 is a diagram illustrating features as described herein;
FIG. 5 is a flowchart illustrating steps as described herein;
FIG. 6 is a flowchart illustrating steps as described herein;
FIG. 7 is a flowchart illustrating steps as described herein; and
FIG. 8 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AI: artificial intelligence
- AMF: access and mobility management function
- BB: baseband
- CE: control element
- CHO: conditional handover
- CN: core network
- CPC: conditional PSCell change
- CSI-RS: channel state information reference signal
- CU: central unit
- DCI: downlink control information
- DL: downlink
- DRX: discontinuous reception
- DTX: discontinuous transmission
- DU: distributed unit
- eDRX: extended discontinuous reception
- eMBB: enhanced mobile broadband
- eMTC: enhanced machine type communication
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- ES: energy saving
- ES-CHO: energy saving specific conditional handover
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- HFN: hyper frame number
- HO: handover
- IE: information element
- I/F: interface
- L1: layer 1
- LTE: long term evolution
- MAC: medium access control
- (m)MIMO: (massive) multiple-in multiple-out
- ML: machine learning
- MME: mobility management entity
- ng or NG: new generation
- ng-eNB or NG-eNB: new generation eNB
- NR: new radio
- N/W or NW: network
- O&M: operation and maintenance
- OFDM: orthogonal frequency division multiplexing
- OPEX: operational expenditures
- PBCH: physical broadcast channel
- PDCP: packet data convergence protocol
- PHY: physical layer
- PoC: Push-to-talk over cellular
- PSG: power saving group
- PSW: power saving window
- RA: registration area
- RAN: radio access network
- RAT: radio access technology
- RedCap: reduced capability
- RF: radio frequency
- RLC: radio link control
- RNA: RAN-based notification area
- RRC: radio resource control
- RRH: remote radio head
- RRM: radio resource management
- RS: reference signal
- RSRP: reference signal received power
- RSRQ: reference signal received quality
- RU: radio unit
- Rx: receiver
- SDAP: service data adaptation protocol
- SFN: system frame number
- SGW: serving gateway
- SI: system information
- SIB: system information block
- SINR: signal-to-interference plus noise ratio
- SMF: session management function
- SS: synchronization signal
- SSB: synchronization signal block
- TA: tracking area
- TCI: transmission configuration indicator
- TRX: transreceiver
- Tx: transmitter
- UE: user equipment (e.g., a wireless, typically mobile device)
- UPF: user plane function

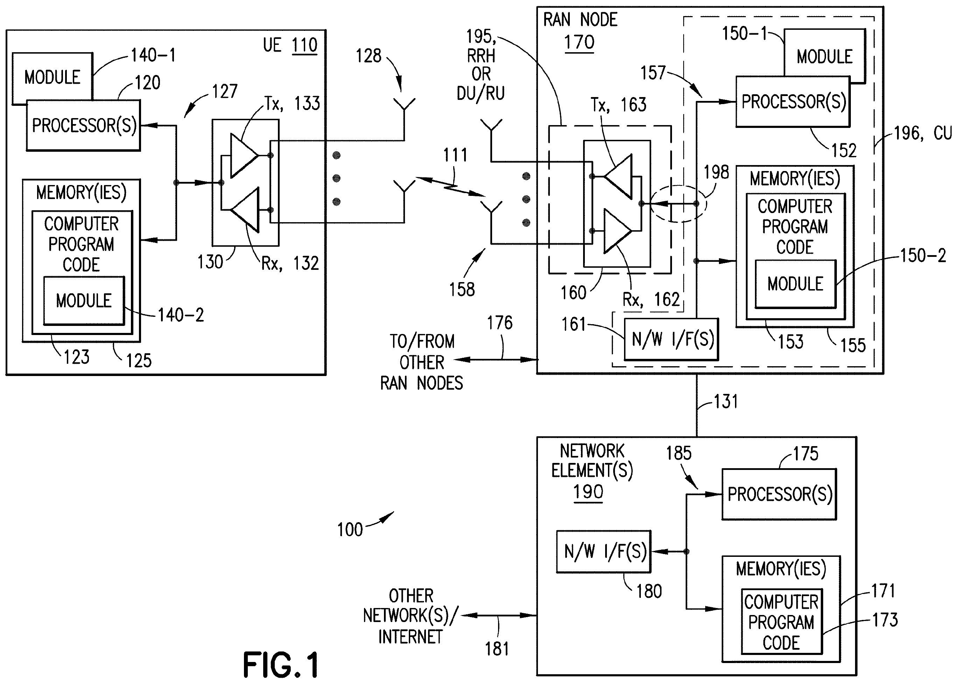

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Features as described herein generally relate to enhancements for network energy savings in 5G NR and in future technologies, e.g. 6G. More specifically, features as described herein may generally relate to the conditional handover feature of 5G NR, which may be used during cell shutdown for network energy savings.

Reducing the energy consumption of mobile networks and, particularly, of the RAN, which consumes the largest part of the total energy consumption in the network, has gained significant attention. A study on network energy savings will be carried out in 3GPP Rel.18, and may aim at identifying network energy saving techniques in time, frequency, spatial, and/or power domains, targeting both transmissions and receptions. Potential support/feedback from UE, potential UE assistance information, and information exchange/coordination over network interfaces may also be in scope of the study (RP-213554).

In Rel. 18, there will also be a work item Artificial Intelligence(AI)/Machine Learning(ML) for NG-RAN (RP-213602), which is based on the Rel.17 study, with study item description included in RP-201620 "Study on enhancement for data collection for NR and EN-DC". The work item will aim to specify data collection enhancements and signaling support within existing NG-RAN interfaces and architecture for a number of AI/ML based use cases. One of those use cases is energy saving.

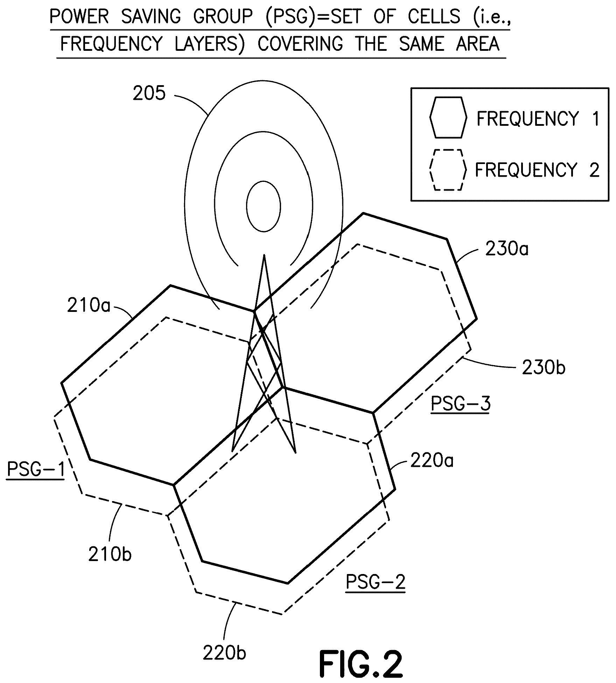

Energy saving functionality has been introduced to reduce the network energy consumption and the energy-related operational expenses when possible. Energy saving deployments consider capacity booster cells that are deployed on top of coverage cells to enhance capacity for E-UTRA or NR in single or dual connectivity. Those cells are allowed to be optimized by being switched off when capacity is not needed and re-activated on demand. Switching off a cell can be done by the OAM and by the NG-RAN node owning the capacity cell which can autonomously switch it off using e.g., cell load information. Cell shutdown during low load periods is one of the most effective means to achieve network energy savings, since all the power-hungry hardware components of the cell can be turned off, and thus significant energy consumption reduction can be achieved. In a cell shutdown scenario, there may be a 10-15% reduction in electricity consumption when a cell is shut down, as compared to when the cell is not shut down. Referring now to FIG. 2, illustrated is an example of the cell shutdown feature. A Power Saving Group (PSG) is a set of cells (i.e. frequency layer) covering the same area. In the example of FIG. 2, PSG-1 comprises two cells, 210a and 210b, that cover the same area with different frequencies; PSG-2 comprises two cells, 220a and 220b, that cover the same area with different frequencies; and PSG-3 comprises two cells, 230a and 230b, that cover the same area with different frequencies. While in the example of FIG. 2 the PSGs each consist of two frequency layers, this example is non-limiting; a greater or fewer number of frequency layers may be included in a greater or fewer number of PSGs.

A cell may save energy by switching off. Energy savings may result in operational expenditure (OPEX) savings. For each PSG, the load may be compared against one or more thresholds. A cell may be switched off if the load is less than a threshold. A cell may be switched on again if the load is greater than another threshold. The thresholds may be predetermined. The comparison of the load of the PSG may be compared against a threshold. Under low traffic conditions, layer(s) of PSGs may be switched off without over-degrading network performance while saving energy.

A cell switch off procedure may provide potential energy savings, as discussed above. In addition, other means may be adopted while the cell is still active to save energy. For example, Radio frequency (RF) paths micro cuts (e.g. micro discontinuous transmission (DTX)) may cause a 10-20% reduction in electricity consumption (e.g. more than 40% in a no load situation). This entails that the RF power consumption may be reduced as part of RF paths micro cuts when no transmissions are to be made. As a further example, through (massive) multiple-in multiple-out ((m)MIMO) muting, there may be a 10-30% reduction in electricity consumption. In a first case, switching off may occur horizontally for, e.g., half the transceivers. In a second case, switching off may occur vertically for, e.g., half the transceivers. There may be further reduction in electricity consumption if baseband components can also be switched off.

Features as described herein generally relate to Conditional Handover (CHO), which was defined in 5G NR Release 16. This new handover procedure may allow the UE to perform a handover when certain handover conditions are met. In other words, a CHO is a handover that is executed by the UE when the configured execution conditions are met, without requiring a handover command by/from the network. This procedure may have the technical effect of avoiding delays associated with the network-controlled procedure and reducing handover failures.

Once the shutdown of a cell is decided (e.g. autonomously by the cell or by operation and management function (O&M)), the UEs that are currently connected to the cell need to be offloaded away from the cell before the shutdown can be completed. This may be done via handing each connected UE over to a neighbor cell, which may have overlapping coverage and may be able to accommodate for the additional load, using regular handovers. The neighbor cell may belong to the coverage layer, or to another frequency layer (e.g., in case shutting down is done at a PSG of a given frequency layer). If the offloading is not complete before cell shutdown, handover (HO) failure(s) may occur. Faster offloading may have the technical effect of improving power consumption reduction.

However, offloading the traffic from the cell using regular handovers can be rather slow. The process may entail initiation of a gradual reduction of the transmit power (e.g. of the synchronization signal blocks (SSB)) in multiple successive steps, which in turn may reduce the received signal strength (reference signal received power/reference signal received quality (RSRP/RSRQ)) observed by the UEs. The UE(s) in RRC Connected mode may perform the radio resource management (RRM) measurements of the serving cell and neighbor cells (RSRP/RSRQ) and may report these measurements to the network. This may assist the network in identifying the relevant neighbor cell that may be used for handover for the UE, given the UE's radio conditions. For example, when RSRP of a target cell becomes a defined offset better than that of the serving cell, the UE may trigger an A3 event (triggered when a neighboring cell becomes better than the serving cell by an offset) and send a measurement report (indicating the best candidate cell) to the serving cell. After the determination of the target cell for a given UE based on the UE RRM measurements reporting, the serving cell may, finally, prepare the selected cell over Xn and trigger the handover by sending the handover command to the UE. However, the handover procedure may be affected by handover failure. Whenever the handover fails, the UE should perform cell selection, after which re-establishment is performed. As a result, the UE may perform re-establishment on the source cell, and the handover procedure (i.e. to the target cell) may have to be repeated (e.g. if the conditions for handover persist).

Example embodiments of the present disclosure may have the technical effect of allowing faster cell offloading before cell shutdown (e.g. avoiding HO failures) for improved power consumption reduction.

As per TS 38.331 Section 5.3.5.13 "Conditional Reconfiguration", the CHO configuration (ConditionalReconfiguration-r16 in RRCReconfig) provided by the source gNB to the UE may include the following information elements (IE): the candidate target SpCell(s) that have been prepared for conditional handover (generated by the candidate gNB(s)); the execution criteria (e.g. the criteria the UE should use for conditional reconfiguration execution generated by the source gNB (i.e. controlling when to trigger CHO)); and/or the RS type (SSB or channels state information reference signal (CSI-RS) -based) (e.g. the RS that the UE should use for obtaining beam and cell measurement results, which are used for evaluating the conditional reconfiguration execution condition. Note that only a Single Reference signal type is supported for CHO and at most two different trigger quantities (e.g. RSRP and RSRQ, RSRP and SINR, etc.) can be configured simultaneously for the evaluation of CHO execution conditions of a single candidate cell).

It may be noted that TS 38.331 specifies that if a UE is configured with the CHO configuration and before the CHO execution condition is satisfied, a HO command may be received from the gNB. The UE may trigger the handover based on the HO command received, without waiting for any of the CHO conditions to be satisfied. This means that the legacy HO command may take precedence over the CHO Configuration (if configured).

Up to 8 CHO configurations may be configured for a UE (depending on UE capability). Each CHO configuration may consist of a CHO ID, 1-2 MeasIDs (e.g. one with RSRP and another with RSRQ) and/or (intra-RAT) HO command.

Once triggered, the CHO may be performed as a normal handover.

In contrast to example embodiments of the present disclosure, in the legacy CHO the UE may start evaluating the CHO execution condition(s) upon receiving the CHO configuration, and may stop evaluating the execution condition(s) once a handover is executed.

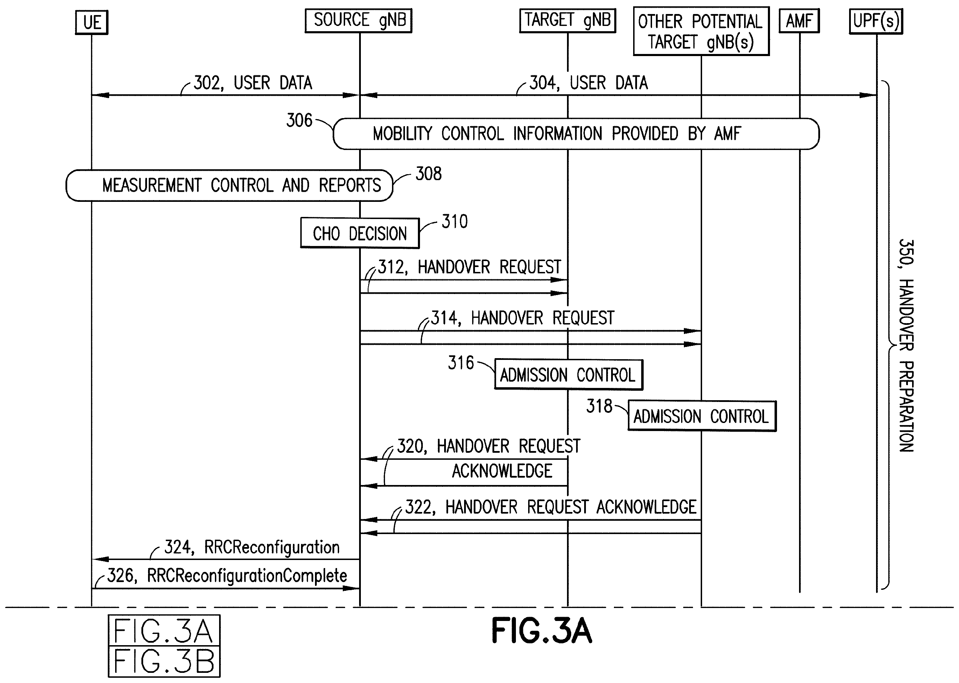

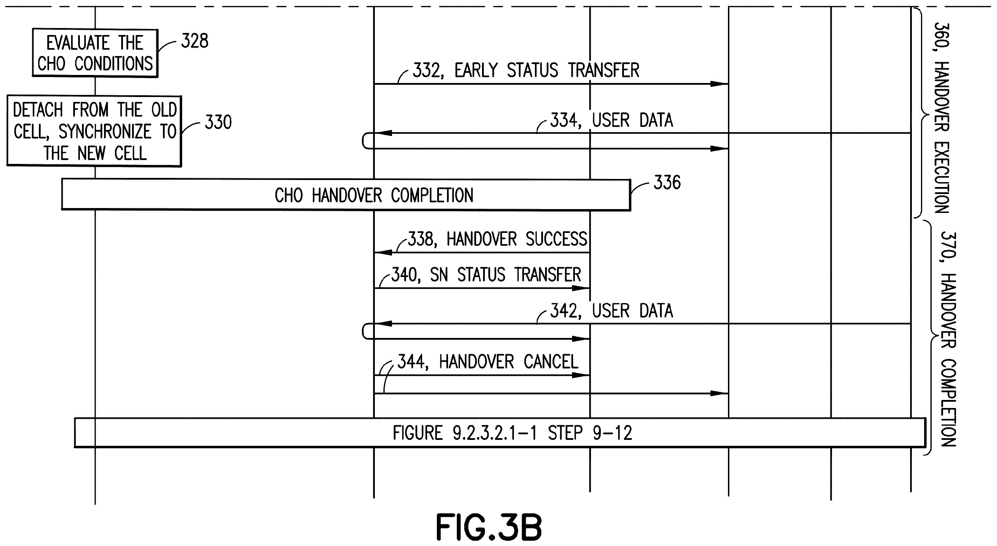

Referring now to FIG. 3, illustrated is a basic intra- access and mobility management function/user plane function (AMF/UPF) conditional handover scenario, as described in TS 338.300. At 302, user data may be transferred between a UE and a source gNB. At 304, user data may be transferred between the source gNB and a UPF. At 306, mobility control information may be provided by an AMF to the source gNB. At 308, measurement control report(s) may be transferred between the UE and the source gNB. At 310, the source gNB may make a CHO decision, for example based on information of the measurement and control report(s). At 312, the gNB may send one or more handover requests to a target gNB. At 314, the source gNB may send one or more handover requests to other potential target gNB(s); this step may be optional. At 316, the target gNB may perform admission control. At 318, the other potential target gNB(s) may, optionally, perform admission control. At 320, the target gNB may send one or more handover request acknowledgements to the source gNB. At 322, the other potential target gNB(s) may send one or more handover request acknowledgements to the source gNB. At 324, the source gNB may send a RRCReconfiguration message to the UE. At 326, the UE may send a RRCReconfigurationComplete message to the source gNB. The steps 302-326 may be considered part of handover preparation 350.

At 328, the UE may evaluate the CHO condition(s). At 330, the UE may detach from the old cell (source gNB) and synchronize to the new cell (target gNB or other potential target gNB(s)). At 332, the source gNB may, optionally, send to the other potential target gNB(s). At 334, the UP may send user data to the source gNB, which may, optionally, forward the user data to the other potential target gNB(s). At 336, the UE, source gNB, and target gNB may complete CHO handover. The steps 328-336 may be considered part of handover execution 360.

At 338, the target gNB may send a handover success message to the source gNB. At 340, the source gNB may perform a SN status transfer to the target gNB. At 342, the UP may send user data to the source gNB, which may forward the user data to the target gNB. At 344, the source gNB may send a handover cancel message to the target gNB and, optionally, the other potential target gNB(s). The steps 338-344 may be considered part of handover completion 370.

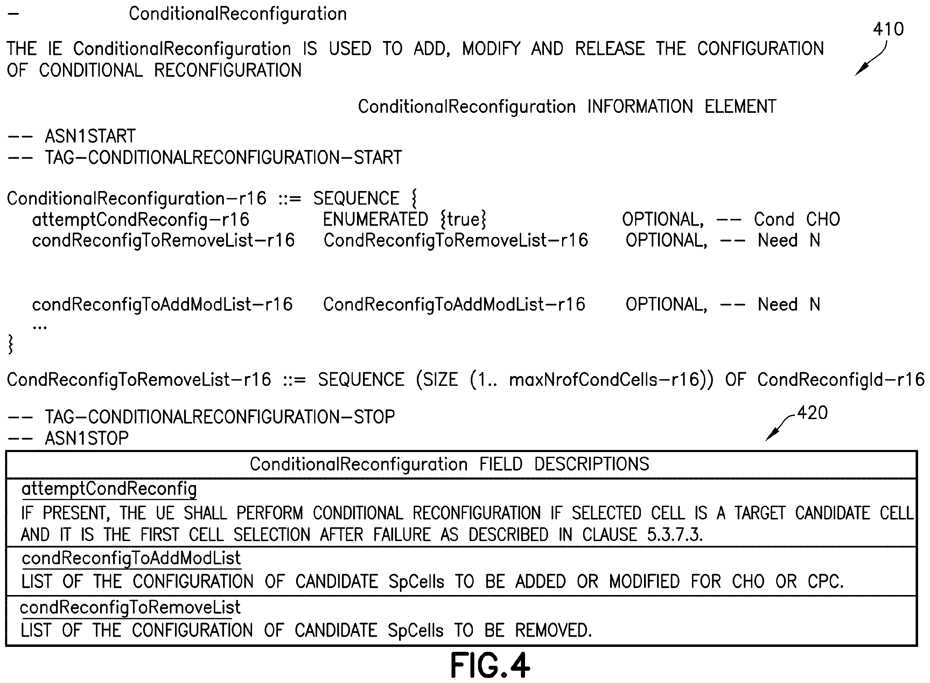

Referring now to FIG. 4, illustrated is an example of a ConditionalReconfiguration IE (410) that may be used to add, modify, and/or release the configuration of conditional reconfiguration (TS 38.423). As noted in the ConditionalReconfiguration field descriptions (420), the attemptCondReconfig field may be used to cause a UE to perform conditional reconfiguration if a selected cell is a target candidate cell, and it is the first cell selection after failure. The condReconfigToAddModList field may be used to provide a list of configurations of candidate SpCells to be added or modified for CHO or CPC. The condReconfigToRemoveList field may be used to provide a list of configurations of candidate SpCells to be removed.

Part of the handover request from source NG-RAN node to target NG-RAN node, to request the preparation of resources for a handover, is illustrated in Table 1:

**Table 1**

| | | | | | | | |
|---|---|---|---|---|---|---|---|
| **Conditional Handover Information Request** | | O | | | | YES | reject |
| | >CHO Trigger | M | | ENUMERAT ED (CHO-initiation, CHO-replace, ...) | | - | |
| | >Target NG-RAN node UE XnAP ID | C-ifCHOmod | | NG-RAN node UE XnAP ID 9.2.3.16 | Allocated at the target NG-RAN node | - | |
| | >Estimated Arrival Probability | O | | INTEGER (1..100) | | - | |

The "Estimated Arrival Probability" may enable the target node to apply some statistical resource optimization based on the estimated arrival probability (where 100% may be interpreted as a UE arrives with certainty like in "classical HO").

A technical effect of example embodiments of the present disclosure may be to enable conditional handover enhancements for energy saving.

In an example embodiment, the network may configure a UE in RRC Connected state with one or more energy saving specific conditional handover (ES-CHO) configurations, which may contain parameters optimized for energy saving. A technical effect of the ES-CHO configurations may be to enable a fast offload of the UE to a different cell. In an example embodiment, the UE may use the ES-CHO configurations when the serving cell (e.g. a capacity cell) enters one or more corresponding "energy-saving mode" (such as "cell shutdown", "network transmit power reduction", "mMIMO transmit antenna elements muting", etc.).

The use of such ES-CHO configuration(s) may have the technical effect of enabling a fast offload of the UE to a different cell (compared to classical HO), which is required before the cell can enter the new mode, and in turn may allow the cell to attain a larger energy saving potential. This benefit may be especially important when more dynamic time adaptation of the power saving modes are expected as part of the evolution of energy efficient schemes in 3GPP (e.g. with the Rel.18 study on energy saving (RP-213554)).

In an example embodiment, the ES-CHO configuration may include one or more candidate target cells. The one or more candidate target cells may include at least one of: a cell of a coverage layer associated to the serving cell, or a cell of a frequency layer having lower priority to enter a given energy saving mode (e.g. cell switch off) than the frequency layer of the serving cell (e.g. a lower frequency layer than the serving layer). For example, the target cell(s) assignment may be based on network shutdown policies and/or network deployment (e.g. depending on which frequency layers are shut down and in which order, and which (lower) frequency layer(s) offer coverage when a given (higher) frequency layer is shut down). A dedicated ES-CHO configuration may be associated per "energy-saving" mode.

In an example embodiment, a network indication may be used to trigger UE application of an ES-CHO configuration. In other words, a serving cell may indicate when the ES-CHO "command" may be executed by the UE (i.e. when the ES-CHO configuration has to be applied) using any combination of the following options:
Implicit indication: the UE may execute the ES-CHO command whenever the serving cell indicates that it is entering/applying the "energy-saving" mode that is associated with a CHO configuration received by the UE. In an example embodiment, the network indication of the current "energy-saving" mode may be provided via system information.
Explicit indication: the serving cell may explicitly indicate the activation of the ES-CHO configuration or, similarly, may explicitly indicate network offload (e.g. decision to shut down). In an example embodiment, these indications may be provided by a downlink control information (DCI)/MAC CE.
Time-based indication: the ES-CHO configuration may include a (predicted) time at which it should be enforced. This may have the technical effect of giving a cell a chance to serve traffic while it has already planned a shutdown in the near future. In an example embodiment, the time may be provided with the system frame number (SFN) or Hyper Frame Number (HFN). Additionally or alternatively, the time may be provided using a (predicted) number of time units in the future (e.g. after receiving of the ES-CHO configuration) by when the ES-CHO configuration should be applied.

In an example embodiment, the UE may select a target cell for ES-CHO. When the serving cell indicates that the ES-CHO command associated to a certain energy saving mode has to be executed, the UE may determine the target cell based on either of the following options, where the option may be selected based on a decision of the capacity/frequency layer:
Option#1/Default (target cell may be selected by the UE, out of configured cells, based on radio measurements (e.g. RRM measurements)). The UE may collect RRM measurements of the target cells included in the corresponding ES-CHO configuration, and may select a target cell for ES-CHO, of the configured target cells, based on the collected RRM measurements. In an example embodiment, the ES-CHO configuration may contain the radio conditions to be evaluated.
Option #2 (target cell may be selected by the UE based on pre-determined/previously provided information(s) and/or network configuration(s)). The UE may select the target cell for ES-CHO without performing RRM measurements, but rather based on: pre-determined/stored information, at the UE, of a (suitable) target cell of the potential target cells provided in the ES-CHO configuration; and/or pre-determined/stored information at network, and network configuration of the target cells and selection criteria (in an example embodiment, the ES-CHO configuration may contain a list of target cells, where each target cell may be associated to a given transmission configuration indicator (TCI) state/serving cell's downlink (DL) beam (SSB/ CSI-RS-based) and/or to a serving cell RSRP value. The UE may then select the target cell corresponding to its serving beam (TCI state)/RSRP level). Additionally or alternatively, target cell selection may be performed based on a TCI state associated with the serving cell.

In an example embodiment, selection of a target cell may be optimized using AI/ML. AI/ML may be used to train the capacity/frequency layer such that the UE may perform selection of a target cell for UE-CHO according to an example embodiment described above.

Machine learning tools, such as neural networks, may be utilized in an ever increasing number of applications for many different types of devices, such as mobile phones, as described above. Neural networks, and other machine learning tools, may be able to learn properties from input data, either in a supervised way or in an unsupervised way. Such learning may be the result of a training algorithm, or of a meta-level neural network providing a training signal.

A training algorithm may consist of changing some properties of the neural network so that the output of the neural network is as close as possible to a desired output. Training may comprise changing properties of the neural network so as to minimize or decrease the output's error, also referred to as the loss. Examples of losses include mean squared error (MSE), cross-entropy, etc. In recent deep learning techniques, training is an iterative process, where, at each iteration, the algorithm modifies the weights of the neural network to make a gradual improvement of the network's output, i.e., to gradually decrease the loss.

Training a neural network may comprise an optimization process, but the final goal of machine learning is different from the typical goal of optimization. In optimization, the goal is to minimize loss. In machine learning generally, in addition to the goal of optimization, the goal is to make the model learn the properties of the data distribution from a limited training dataset. In other words, the training process is additionally used to ensure that the neural network learns to use a limited training dataset in order to learn to generalize to previously unseen data, i.e., data which was not used for training the model. This additional goal is usually referred to as generalization. In practice, data may be split into at least two sets, the training set and the validation set. The training set may be used for training the network, i.e., for modification of its learnable parameters in order to minimize the loss. The validation set may be used for checking the performance of the neural network with data which was not used to minimize the loss (i.e. which was not part of the training set), where the performance of the neural network with the validation set may be an indication of the final performance of the model. The errors on the training set and on the validation set may be monitored during the training process to understand if the neural network is learning at all and if the neural network is learning to generalize. In the case that the network is learning at all, the training set error should decrease. If the network is not learning, the model may be underfitting. In the case that the network is learning to generalize, validation set error should decrease and not be much higher than the training set error. If the training set error is low, but the validation set error is much higher than the training set error, or the validation set error does not decrease, or it even increases, the model may be overfitting. Overfitting may mean that the model has memorized the training set's properties and performs well only on that set, but performs poorly on a set not used for tuning its parameters. In other words, the model has not learned to generalize.

In an example embodiment, the capacity/frequency layer may build a confidence (probability) on how well it knows the overlapping radio environment offered by a coverage/frequency layer and a target cell in a coverage/frequency layer suitable for the offloading of a given UE in case of handover. In an example embodiment, UE RSRP/RSRQ measurements of strongest neighboring cells, along with the UE location (exact coordinates, beam info, etc.), may be used to map locations/areas/beams in the energy saving (ES) cell with the best target cell in the coverage/frequency layer(s) where UEs may be offloaded at the next cell change. As another option, the capacity cell may use UE Trajectory prediction information, calculated/predicted by the capacity cell, alone or together with UE measurements (e.g., UE RSRP/RSRQ measurements of strongest neighboring cells, UE location information, etc.) to determine the best coverage cell where UE traffic should be offloaded in case of a cell switch-off. For instance, if predicted UE trajectory at the capacity cell can determine the next (coverage) cell with high probability, this may allow the capacity cell to build a high confidence on the suitable target cell in the coverage/frequency layer to offload a certain UE in case of handover. In an example embodiment, confidence (probability) values may be updated based on feedback about the selected option corresponding to different UE locations and handover performance, e.g., related to the UE performance of handed-over UEs in terms of their bitrate, packet loss rate, latency, etc. In an example embodiment, if confidence (probability) is higher than a threshold, the UE may select the target cell based on predetermined information and/or network configuration. In an example embodiment, if confidence (probability) is lower than or equal to the threshold, the UE may select the target cell based on RRM measurements. The threshold may be chosen to be a high value, for example 90% confidence.

In an example embodiment, a target cell may prepare/be prepared for ES-CHO. In an example embodiment, target cell preparation may be performed as per legacy procedure, with the addition of the power saving trigger/cause and, if available, the (predicted) time at which the power saving mode will be applied. The target gNB may optimize RRM resource reservation based on the received information. Additionally or alternatively, information about the handover preparation for CHO may be added to the cell deactivation indication sent over the Xn/X2 interface towards a neighbor gNB. The information about the handover preparation for CHO may include a list of currently active UEs to be offloaded to that gNB (i.e. the UEs for which the neighbor gNB was configured as a target cell for offload-based CHO).

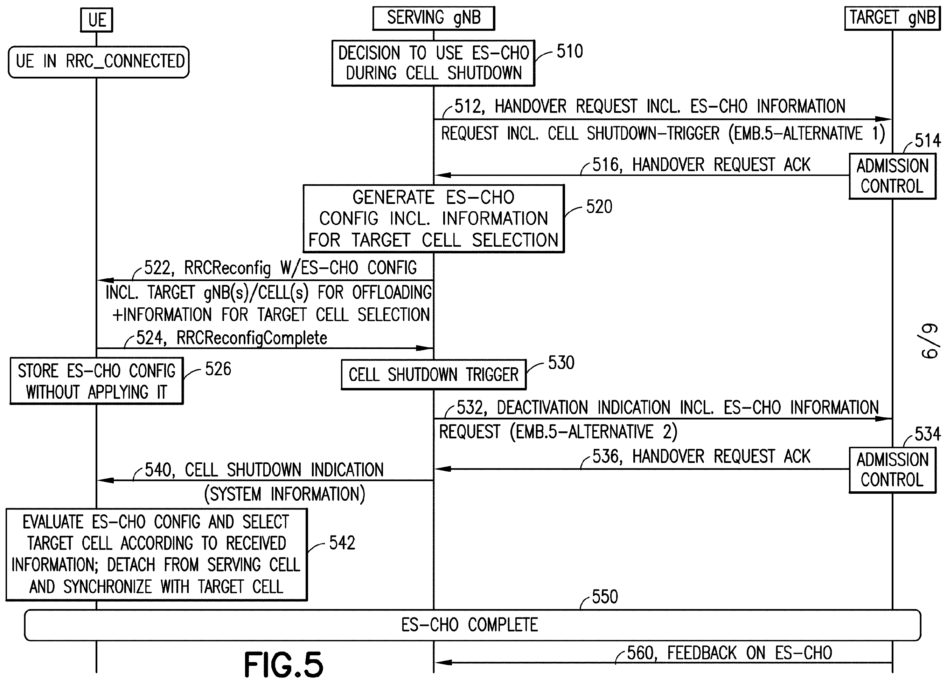

Referring now to FIG. 5, illustrated is an example signaling flowchart according to example embodiments of the present disclosure. The signaling flowchart includes exchanges between a UE, which may be in RRC_Connected state with respect to the serving gNB.

At 510, the serving gNB may decide/determine to use ES-CHO during cell shutdown. At 512, the serving gNB may transmit a handover request to the target gNB. The handover request may include an ES-CHO information request, including a Cell Shutdown-trigger. This may be considered an example in which target cell preparation may be performed as per legacy procedure, with the addition of the power saving trigger/cause and, if available, the (predicted) time at which the power saving mode will be applied. At 514, the target gNB may perform admission control. At 516, the target gNB may transmit a handover request acknowledgement to the serving gNB. At 520, the serving gNB may generate an ES-CHO configuration. The ES-CHO configuration may include information for target cell selection. At 522, the serving gNB may transmit, to the UE, an RRCReconfig message. The RRCReconfig message may include the ES-CHO configuration, which may include target gNB(s) for offloading, target cell(s) for offloading, and/or information for target cell selection. In an example embodiment, the information for target cell selection may be based, at least partially, on the handover request acknowledgment. At 524, the UE may transmit, to the serving gNB, an RRCReconfigComplete message. At 526, the UE may store the ES-CHO configuration without applying it. For example the conditions for application of the ES-CHO configuration may not have occurred.

At 530, the serving gNB may receive/detect an energy saving mode trigger. For example, the energy saving mode trigger may be a cell shutdown trigger. Triggers for other types of energy saving modes may be possible, and may occur to a person of ordinary skill in the art (e.g. trigger for "cell shutdown", trigger for "network transmit power reduction", trigger for "mMIMO transmit antenna elements muting", etc.). At 532, the serving gNB may transmit, to the target gNB, a deactivation indication. The deactivation indication may include an ES-CHO information request. This may be an example of information about the handover preparation for CHO being added to the cell deactivation indication sent over the Xn/X2 interface towards a neighbor gNB. At 534, the target gNB may perform admission control. At 536, the target gNB may transmit, to the serving gNB, a handover request acknowledgement. At 540, the serving gNB may transmit a cell shutdown indication to the UE. For example the indication may be part of system information. In an example embodiment, the indication may be based, at least partially, on the handover request acknowledgement. At 542, the UE may evaluate the ES-CHO configuration and select a target cell according to the received information. The UE may detach from the serving cell and synchronize with the (selected) target cell. At 550, the ES-CHO may be complete. At 560, the target gNB may transmit, to the serving gNB, feedback on ES-CHO.

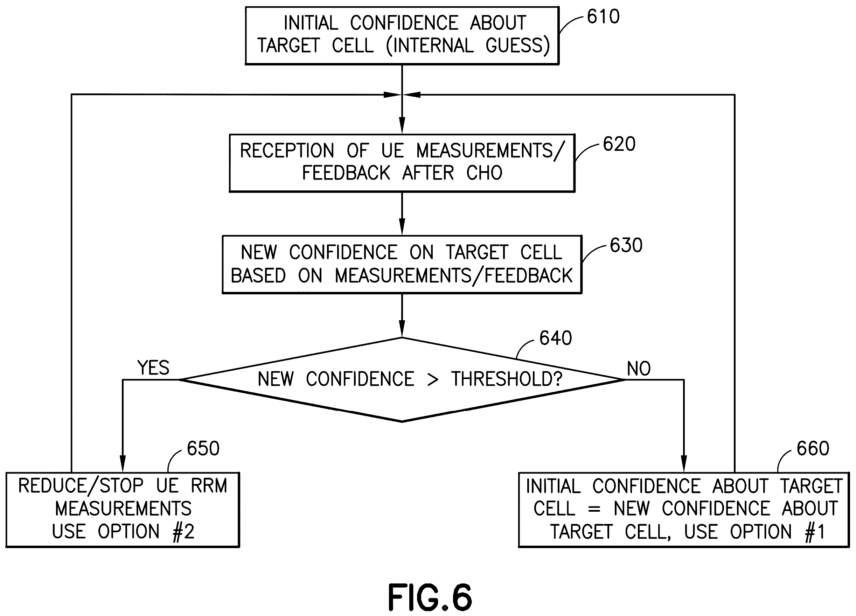

Referring now to FIG. 6, illustrated is a flow chart of an example network algorithm to update the confidence level on the target cell selection for UE offloading during energy saving operations of a source node. The source node may have an initial confidence on the best candidate target cell for a given UE, or for a set of UEs at a given location, 610. This may be available through network configuration or through some initial guess that the source cell makes e.g., by utilizing a ML model available at the source. In the beginning, this guess/confidence may not be always accurate enough, and therefore the source node may update it/improve it through UE measurements (620) that, for example, may enable determination of the strongest candidate target cell for different UEs and UE locations, as well as through feedback information from a target node on the actual UE performance after a handover is executed (620). This information may help the source node to train the ML model it has available (630). When the source cell has a good enough confidence on the best target node for a given UE/set of UEs at a certain location, it can reduce or switch off RRM measurements for this UE/sets of UEs (i.e., configure the UE(s) to operate under option #2 of embodiment #3) (650). In other words, when the new confidence is greater than a threshold (640), the source cell may cause the UE to reduce/stop use of RRM measurements and may cause/enable UE selection of a target cell based on pre-determined information and/or network configuration instead (650). If the UE was not previously performing RRM measurements, the UE may be instructed to continue to omit performance of RRM measurements.

In the absence of RRM measurements, the source cell may still determine that its confidence about the best target has degraded, for example through feedback information on UE performance after a handover is executed. Performance degradation (640) may trigger the source node to turn back on RRM measurements for a given UE (or for a set of UEs at a given location) by forcing those to operate under option #1 of embodiment #3 (660). RRM measurements may also provide input to the source cell to retrain its ML model that determines the best candidate target cell for a given UE or for a set of UEs residing at a certain location. In other words, if the confidence is determined to be below the threshold (640), the source cell may determine that the initial confidence about the target is equal to the new confidence about the target, and may cause/enable UE selection of the target cell based on RRM measurements.

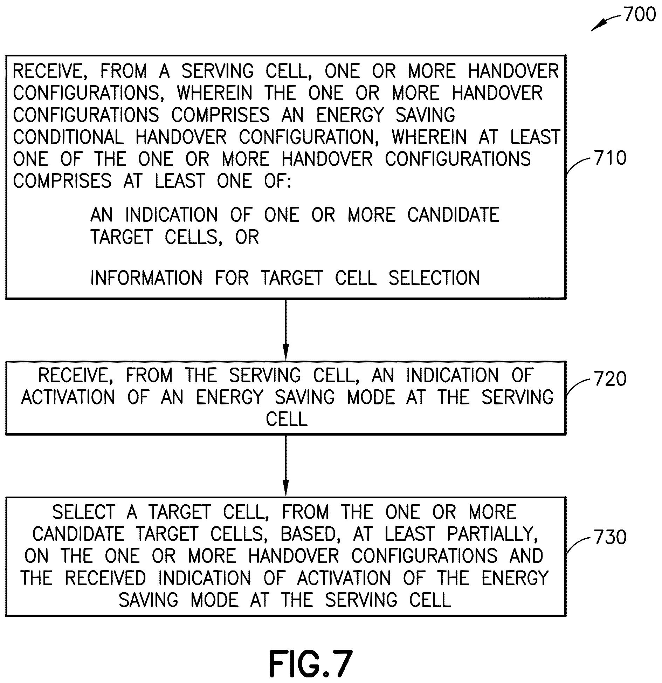

FIG. 7 illustrates the potential steps of an example method 700. The example method 700 may include: receiving, from a serving cell, one or more handover configurations, wherein the one or more handover configurations comprises an energy saving conditional handover configuration, wherein at least one of the one or more handover configurations comprises at least one of: an indication of one or more candidate target cells, or information for target cell selection, 710; receiving, from the serving cell, an indication of activation of an energy saving mode at the serving cell, 720; and selecting a target cell, from the one or more candidate target cells, based, at least partially, on the one or more handover configurations and the received indication of activation of the energy saving mode at the serving cell, 730.

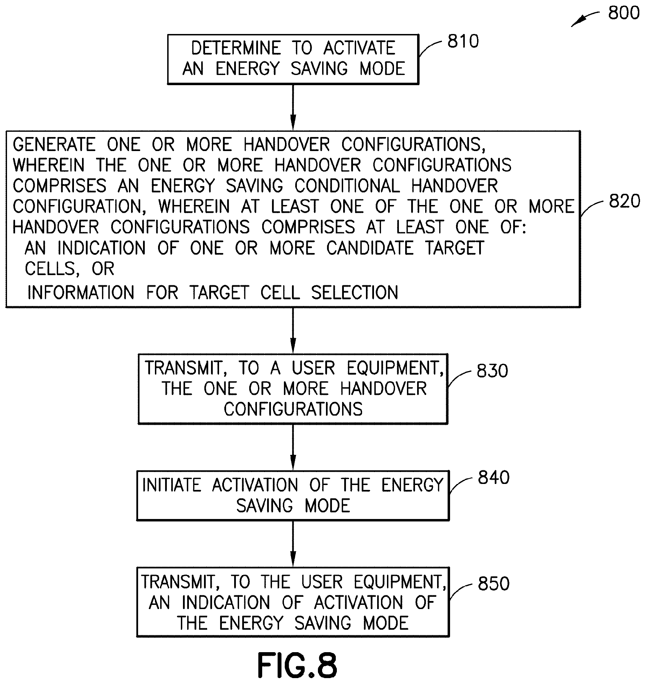

FIG. 8 illustrates the potential steps of an example method 800. The example method 800 may include: determining to activate an energy saving mode, 810; generating one or more handover configurations, wherein the one or more handover configurations comprises an energy saving conditional handover configuration, wherein at least one of the one or more handover configurations comprises at least one of: an indication of one or more candidate target cells, or information for target cell selection, 820; transmitting, to a user equipment, the one or more handover configurations, 830; initiating activation of the energy saving mode, 840; and transmitting, to the user equipment, an indication of activation of the energy saving mode, 850.

In accordance with one example embodiment, an apparatus may comprise: at least one processor; and at least one memory including computer program code; the at least one memory and the computer program code configured to, with the at least one processor, cause the apparatus at least to: receive, from a serving cell, one or more handover configurations, wherein the one or more handover configurations may comprise an energy saving conditional handover configuration, wherein at least one of the one or more handover configurations may comprise at least one of: an indication of one or more candidate target cells, or information for target cell selection; receive, from the serving cell, an indication of activation of an energy saving mode at the serving cell; and select a target cell, from the one or more candidate target cells, based, at least partially, on the one or more handover configurations and the received indication of activation of the energy saving mode at the serving cell.

The indication of activation of the energy saving mode may be included in a broadcast message.

The example apparatus may be further configured to: disconnect from the serving cell; and synchronize with the selected target cell.

The at least one of the one or more handover configurations may further comprise an indication of one or more measurements to perform.

The example apparatus may be further configured to: perform at least one of the one or more measurements; and select the target cell based, at least partially, on a result of the at least one performed measurement.

Selecting the target cell may comprise the example apparatus being further configured to: select the target cell based, at least partially, on one of: predetermined information, located at the apparatus, that is associated with the target cell, or the information for target cell selection, which may comprise at least one of: a transmission configuration indicator state associated with the serving cell or the target cell, a reference signal received power value associated with the serving cell or the target cell, a downlink beam of the serving cell or the target cell, or selection criteria.

The example apparatus may be in a radio resource control connected state.

The indication of activation of the energy saving mode at the serving cell may comprise an indication of at least one of: cell shutdown, network transmit power reduction, or multiple-in multiple-out transmit antenna element muting.

The indication of the one or more candidate target cells may be based, at least partially, on at least one of: one or more network shutdown policies of the serving cell, one or more frequency layers of the serving cell that are shut down, an order of shutdown of the one or more frequency layers of the serving cell that are shut down, or a frequency layer of a same power saving group as at least one of the one or more frequency layers of the serving cell that are shut down.

The example apparatus may be further configured to: select an energy saving conditional handover configuration of the one or more handover configurations based, at least partially, on the indication of activation of the energy save mode at the serving cell, wherein selecting the target cell may be further based on the selected energy saving conditional handover configuration.

The example apparatus may be further configured to: receive an indication of when the one or more handover configurations are to be applied, wherein the indication may comprise at least one of: the indication of activation of the energy saving mode at the serving cell, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with one aspect, an example method may be provided comprising: receiving, with a user equipment from a serving cell, one or more handover configurations, wherein the one or more handover configurations may comprise an energy saving conditional handover configuration, wherein at least one of the one or more handover configurations may comprise at least one of: an indication of one or more candidate target cells, or information for target cell selection; receiving, from the serving cell, an indication of activation of an energy saving mode at the serving cell; and selecting a target cell, from the one or more candidate target cells, based, at least partially, on the one or more handover configurations and the received indication of activation of the energy saving mode at the serving cell.

The indication of activation of the energy saving mode may be included in a broadcast message.

The example method may further comprise: disconnecting the user equipment from the serving cell; and synchronizing the user equipment with the selected target cell.

The at least one of the one or more handover configurations may further comprise an indication of one or more measurements to perform.

The example method may further comprise: performing at least one of the one or more measurements; and selecting the target cell based, at least partially, on a result of the at least one performed measurement.

The selecting of the target cell may comprise: selecting the target cell based, at least partially, on one of: predetermined information, located at the user equipment, that is associated with the target cell, or the information for target cell selection, which may comprise at least one of: a transmission configuration indicator state associated with the serving cell or the target cell, a reference signal received power value associated with the serving cell or the target cell, a downlink beam of the serving cell or the target cell, or selection criteria.

The user equipment may be in a radio resource control connected state.

The indication of activation of the energy saving mode at the serving cell may comprise an indication of at least one of: cell shutdown, network transmit power reduction, or multiple-in multiple-out transmit antenna element muting.

The indication of the one or more candidate target cells may be based, at least partially, on at least one of: one or more network shutdown policies of the serving cell, one or more frequency layers of the serving cell that are shut down, an order of shutdown of the one or more frequency layers of the serving cell that are shut down, or a frequency layer of a same power saving group as at least one of the one or more frequency layers of the serving cell that are shut down.

The example method may further comprise: selecting an energy saving conditional handover configuration of the one or more handover configurations based, at least partially, on the indication of activation of the energy save mode at the serving cell, wherein the selecting of the target cell may be further based on the selected energy saving conditional handover configuration.

The example method may further comprise: receiving an indication of when the one or more handover configurations are to be applied, wherein the indication may comprise at least one of: the indication of activation of the energy saving mode at the serving cell, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with one example embodiment, an apparatus may comprise: circuitry configured to perform: receive, from a serving cell, one or more handover configurations, wherein the one or more handover configurations may comprise an energy saving conditional handover configuration, wherein at least one of the one or more handover configurations may comprise at least one of: an indication of one or more candidate target cells, or information for target cell selection; receive, from the serving cell, an indication of activation of an energy saving mode at the serving cell; and select a target cell, from the one or more candidate target cells, based, at least partially, on the one or more handover configurations and the received indication of activation of the energy saving mode at the serving cell.

In accordance with one example embodiment, an apparatus may comprise: processing circuitry; memory circuitry including computer program code, the memory circuitry and the computer program code configured to, with the processing circuitry, enable the apparatus to: receive, from a serving cell, one or more handover configurations, wherein the one or more handover configurations may comprise an energy saving conditional handover configuration, wherein at least one of the one or more handover configurations may comprise at least one of: an indication of one or more candidate target cells, or information for target cell selection; receive, from the serving cell, an indication of activation of an energy saving mode at the serving cell; and select a target cell, from the one or more candidate target cells, based, at least partially, on the one or more handover configurations and the received indication of activation of the energy saving mode at the serving cell.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: receiving, from a serving cell, one or more handover configurations, wherein the one or more handover configurations may comprise an energy saving conditional handover configuration, wherein at least one of the one or more handover configurations may comprise at least one of: an indication of one or more candidate target cells, or information for target cell selection; receiving, from the serving cell, an indication of activation of an energy saving mode at the serving cell; and selecting a target cell, from the one or more candidate target cells, based, at least partially, on the one or more handover configurations and the received indication of activation of the energy saving mode at the serving cell.

The indication of activation of the energy saving mode may be included in a broadcast message.

The means may be further configured to perform: disconnecting from the serving cell; and synchronizing with the selected target cell.

The at least one of the one or more handover configurations may further comprise an indication of one or more measurements to perform.

The means may be further configured to perform: at least one of the one or more measurements; and selecting the target cell based, at least partially, on a result of the at least one performed measurement.

The means configured to perform selecting the target cell may comprise means configured to perform: selecting the target cell based, at least partially, on one of: predetermined information, located at the apparatus, that is associated with the target cell, or the information for target cell selection, which may comprise at least one of: a transmission configuration indicator state associated with the serving cell or the target cell, a reference signal received power value associated with the serving cell or the target cell, a downlink beam of the serving cell or the target cell, or selection criteria.

The example apparatus may be in a radio resource control connected state.

The indication of activation of the energy saving mode at the serving cell may comprise an indication of at least one of: cell shutdown, network transmit power reduction, or multiple-in multiple-out transmit antenna element muting.

The indication of the one or more candidate target cells may be based, at least partially, on at least one of: one or more network shutdown policies of the serving cell, one or more frequency layers of the serving cell that are shut down, an order of shutdown of the one or more frequency layers of the serving cell that are shut down, or a frequency layer of a same power saving group as at least one of the one or more frequency layers of the serving cell that are shut down.

The means may be further configured to perform: selecting an energy saving conditional handover configuration of the one or more handover configurations based, at least partially, on the indication of activation of the energy save mode at the serving cell, wherein selecting the target cell may be further based on the selected energy saving conditional handover configuration.

The means may be further configured to perform: receiving an indication of when the one or more handover configurations are to be applied, wherein the indication may comprise at least one of: the indication of activation of the energy saving mode at the serving cell, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with one example embodiment, a non-transitory computer-readable medium comprising program instructions stored thereon which, when executed with at least one processor, cause the at least one processor to: cause receiving, from a serving cell, of one or more handover configurations, wherein the one or more handover configurations may comprise an energy saving conditional handover configuration, wherein at least one of the one or more handover configurations may comprise at least one of: an indication of one or more candidate target cells, or information for target cell selection; cause receiving, from the serving cell, of an indication of activation of an energy saving mode at the serving cell; and select a target cell, from the one or more candidate target cells, based, at least partially, on the one or more handover configurations and the received indication of activation of the energy saving mode at the serving cell.

The indication of activation of the energy saving mode may be included in a broadcast message.

The example non-transitory computer-readable medium may be further configured to: cause disconnection from the serving cell; and cause synchronization with the selected target cell.

The at least one of the one or more handover configurations may further comprise an indication of one or more measurements to perform.

The example non-transitory computer-readable medium may be further configured to: cause performance of at least one of the one or more measurements; and select the target cell based, at least partially, on a result of the at least one performed measurement.

Selecting the target cell may comprise the example non-transitory computer-readable medium being further configured to: select the target cell based, at least partially, on one of: predetermined information, located at the non-transitory computer-readable medium, that is associated with the target cell, or the information for target cell selection, which may comprise at least one of: a transmission configuration indicator state associated with the serving cell or the target cell, a reference signal received power value associated with the serving cell or the target cell, a downlink beam of the serving cell or the target cell, or selection criteria.

The indication of activation of the energy saving mode at the serving cell may comprise an indication of at least one of: cell shutdown, network transmit power reduction, or multiple-in multiple-out transmit antenna element muting.

The indication of the one or more candidate target cells may be based, at least partially, on at least one of: one or more network shutdown policies of the serving cell, one or more frequency layers of the serving cell that are shut down, an order of shutdown of the one or more frequency layers of the serving cell that are shut down, or a frequency layer of a same power saving group as at least one of the one or more frequency layers of the serving cell that are shut down.

The example non-transitory computer-readable medium may be further configured to: select an energy saving conditional handover configuration of the one or more handover configurations based, at least partially, on the indication of activation of the energy save mode at the serving cell, wherein selecting the target cell may be further based on the selected energy saving conditional handover configuration.

The example non-transitory computer-readable medium may be further configured to: cause receiving of an indication of when the one or more handover configurations are to be applied, wherein the indication may comprise at least one of: the indication of activation of the energy saving mode at the serving cell, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with another example embodiment, a non-transitory program storage device readable by a machine may be provided, tangibly embodying a program of instructions executable by the machine for performing operations, the operations comprising: cause receiving, from a serving cell, of one or more handover configurations, wherein the one or more handover configurations may comprise an energy saving conditional handover configuration, wherein at least one of the one or more handover configurations may comprise at least one of: an indication of one or more candidate target cells, or information for target cell selection; cause receiving, from the serving cell, of an indication of activation of an energy saving mode at the serving cell; and select a target cell, from the one or more candidate target cells, based, at least partially, on the one or more handover configurations and the received indication of activation of the energy saving mode at the serving cell.

In accordance with one example embodiment, an apparatus may comprise: at least one processor; and at least one memory including computer program code; the at least one memory and the computer program code configured to, with the at least one processor, cause the apparatus at least to: determine to activate an energy saving mode; generate one or more handover configurations, wherein the one or more handover configurations may comprise an energy saving conditional handover configuration, wherein at least one of the one or more handover configurations may comprise at least one of: an indication of one or more candidate target cells, or information for target cell selection; transmit, to a user equipment, the one or more handover configurations; initiate activation of the energy saving mode; and transmit, to the user equipment, an indication of activation of the energy saving mode.

The indication of activation of the energy saving mode may be included in a broadcast message.

The example apparatus may be further configured to: transmit, to at least one of the one or more candidate target cells, a respective energy saving conditional handover information request, wherein the respective energy saving conditional handover information request may comprise an energy saving mode trigger; and receive, from the at least one candidate target cell, a handover request acknowledgement.

The example apparatus may be further configured to: transmit, to at least one of the one or more candidate target cells, a respective cell deactivation indication, wherein the respective cell deactivation indication may comprise at least one of: an energy saving conditional handover information request, information about handover preparation for conditional handover, or a list of currently active user equipments to be offloaded to a respective candidate target cell of the one or more candidate target cells; and receive, from the one or more candidate target cells, a handover request acknowledgement.

The at least one of the one or more handover configurations may further comprise an indication of one or more measurements to perform.

The example apparatus may be further configured to: receive, from the user equipment, an indication of a result of at least one of the one or more measurements; determine a confidence that a target cell of the one or more candidate target cells will be selected at the user equipment for synchronization based, at least partially, on the indication of the result of the at least one of the one or more measurements; compare the determined confidence with a threshold; based on a determination that the determined confidence is greater than the threshold, indicate to the user equipment to: omit performance of the one or more measurements, and perform target cell selection based on at least one of: predetermined information that is associated with the target cell, or the information for target cell selection; and based on a determination that the determined confidence is less than or equal to the threshold, indicate to the user equipment to perform target cell selection based on performing the one or more measurements.

The information for target cell selection may comprise at least one of: a transmission configuration indicator state associated with the apparatus or a target cell, a reference signal received power value associated with the apparatus or the target cell, a downlink beam of the apparatus or the target cell, or selection criteria.

The energy saving mode may comprise at least one of: cell shutdown, network transmit power reduction, or multiple-in multiple-out transmit antenna element muting.

The indication of the one or more candidate target cells may be based, at least partially, on at least one of: one or more network shutdown policies, one or more frequency layers that are shut down, an order of shutdown of the one or more frequency layers that are shut down, or a frequency layer of a same power saving group as at least one of the one or more frequency layers that are shut down.

The example apparatus may be further configured to: transmit, to the user equipment, an indication of when the one or more handover configurations are to be applied, wherein the indication may comprise at least one of: the indication of activation of the energy saving mode, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with one aspect, an example method may be provided comprising: determining to activate an energy saving mode; generating one or more handover configurations, wherein the one or more handover configurations may comprise an energy saving conditional handover configuration, wherein at least one of the one or more handover configurations may comprise at least one of: an indication of one or more candidate target cells, or information for target cell selection; transmitting, to a user equipment, the one or more handover configurations; initiating activation of the energy saving mode; and transmitting, to the user equipment, an indication of activation of the energy saving mode.

The indication of activation of the energy saving mode may be included in a broadcast message.

The example method may further comprise: transmitting, to at least one of the one or more candidate target cells, a respective energy saving conditional handover information request, wherein the respective energy saving conditional handover information request may comprise an energy saving mode trigger; and receiving, from the at least one candidate target cell, a handover request acknowledgement.

The example method may further comprise: transmitting, to at least one of the one or more candidate target cells, a respective cell deactivation indication, wherein the respective cell deactivation indication may comprise at least one of: an energy saving conditional handover information request, information about handover preparation for conditional handover, or a list of currently active user equipments to be offloaded to a respective candidate target cell of the one or more candidate target cells; and receive, from the one or more candidate target cells, a handover request acknowledgement.

The at least one of the one or more handover configurations may further comprise an indication of one or more measurements to perform.

The example method may further comprise: receiving, from the user equipment, an indication of a result of at least one of the one or more measurements; determining a confidence that a target cell of the one or more candidate target cells will be selected at the user equipment for synchronization based, at least partially, on the indication of the result of the at least one of the one or more measurements; comparing the determined confidence with a threshold; based on a determination that the determined confidence is greater than the threshold, indicating to the user equipment to: omit performance of the one or more measurements, and perform target cell selection based on at least one of: predetermined information that is associated with the target cell, or the information for target cell selection; and based on a determination that the determined confidence is less than or equal to the threshold, indicating to the user equipment to perform target cell selection based on performing the one or more measurements.

The information for target cell selection may comprise at least one of: a transmission configuration indicator state associated with a base station or a target cell, a reference signal received power value associated with the base station or the target cell, a downlink beam of the base station or the target cell, or selection criteria.

The energy saving mode may comprise at least one of: cell shutdown, network transmit power reduction, or multiple-in multiple-out transmit antenna element muting.

The indication of the one or more candidate target cells may be based, at least partially, on at least one of: one or more network shutdown policies, one or more frequency layers that are shut down, an order of shutdown of the one or more frequency layers that are shut down, or a frequency layer of a same power saving group as at least one of the one or more frequency layers that are shut down.

The example method may further comprise: transmitting, to the user equipment, an indication of when the one or more handover configurations are to be applied, wherein the indication may comprise at least one of: the indication of activation of the energy saving mode, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with one example embodiment, an apparatus may comprise: circuitry configured to perform: determine to activate an energy saving mode; generate one or more handover configurations, wherein the one or more handover configurations may comprise an energy saving conditional handover configuration, wherein at least one of the one or more handover configurations may comprise at least one of: an indication of one or more candidate target cells, or information for target cell selection; transmit, to a user equipment, the one or more handover configurations; initiate activation of the energy saving mode; and transmit, to the user equipment, an indication of activation of the energy saving mode.

In accordance with one example embodiment, an apparatus may comprise: processing circuitry; memory circuitry including computer program code, the memory circuitry and the computer program code configured to, with the processing circuitry, enable the apparatus to: determine to activate an energy saving mode; generate one or more handover configurations, wherein the one or more handover configurations may comprise an energy saving conditional handover configuration, wherein at least one of the one or more handover configurations may comprise at least one of: an indication of one or more candidate target cells, or information for target cell selection; transmit, to a user equipment, the one or more handover configurations; initiate activation of the energy saving mode; and transmit, to the user equipment, an indication of activation of the energy saving mode.

In accordance with one example embodiment, an apparatus may comprise means for performing: determining to activate an energy saving mode; generating one or more handover configurations, wherein the one or more handover configurations may comprise an energy saving conditional handover configuration, wherein at least one of the one or more handover configurations may comprise at least one of: an indication of one or more candidate target cells, or information for target cell selection; transmitting, to a user equipment, the one or more handover configurations; initiating activation of the energy saving mode; and transmitting, to the user equipment, an indication of activation of the energy saving mode.

The indication of activation of the energy saving mode may be included in a broadcast message.

The means may be further configured to perform: transmitting, to at least one of the one or more candidate target cells, a respective energy saving conditional handover information request, wherein the respective energy saving conditional handover information request may comprise an energy saving mode trigger; and receiving, from the at least one candidate target cell, a handover request acknowledgement.

The means may be further configured to perform: transmitting, to at least one of the one or more candidate target cells, a respective cell deactivation indication, wherein the respective cell deactivation indication may comprise at least one of: an energy saving conditional handover information request, information about handover preparation for conditional handover, or a list of currently active user equipments to be offloaded to a respective candidate target cell of the one or more candidate target cells; and receiving, from the one or more candidate target cells, a handover request acknowledgement.

The at least one of the one or more handover configurations may further comprise an indication of one or more measurements to perform.

The means may be further configured to perform: receiving, from the user equipment, an indication of a result of at least one of the one or more measurements; determining a confidence that a target cell of the one or more candidate target cells will be selected at the user equipment for synchronization based, at least partially, on the indication of the result of the at least one of the one or more measurements; comparing the determined confidence with a threshold; based on a determination that the determined confidence is greater than the threshold, indicating to the user equipment to: omit performance of the one or more measurements, and perform target cell selection based on at least one of: predetermined information that is associated with the target cell, or the information for target cell selection; and based on a determination that the determined confidence is less than or equal to the threshold, indicating to the user equipment to perform target cell selection based on performing the one or more measurements.

The information for target cell selection may comprise at least one of: a transmission configuration indicator state associated with the apparatus or a target cell, a reference signal received power value associated with the apparatus or the target cell, a downlink beam of the apparatus or the target cell, or selection criteria.

The energy saving mode may comprise at least one of: cell shutdown, network transmit power reduction, or multiple-in multiple-out transmit antenna element muting.

The indication of the one or more candidate target cells may be based, at least partially, on at least one of: one or more network shutdown policies, one or more frequency layers that are shut down, an order of shutdown of the one or more frequency layers that are shut down, or a frequency layer of a same power saving group as at least one of the one or more frequency layers that are shut down.

The means may be further configured to perform: transmitting, to the user equipment, an indication of when the one or more handover configurations are to be applied, wherein the indication may comprise at least one of: the indication of activation of the energy saving mode, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with one example embodiment, a non-transitory computer-readable medium comprising program instructions stored thereon which, when executed with at least one processor, cause the at least one processor to: determine to activate an energy saving mode; generate one or more handover configurations, wherein the one or more handover configurations may comprise an energy saving conditional handover configuration, wherein at least one of the one or more handover configurations may comprise at least one of: an indication of one or more candidate target cells, or information for target cell selection; cause transmitting, to a user equipment, of the one or more handover configurations; initiate activation of the energy saving mode; and cause transmitting, to the user equipment, of an indication of activation of the energy saving mode.

The indication of activation of the energy saving mode may be included in a broadcast message.

The example non-transitory computer-readable medium may be further configured to: cause transmitting, to at least one of the one or more candidate target cells, of a respective energy saving conditional handover information request, wherein the respective energy saving conditional handover information request may comprise an energy saving mode trigger; and cause receiving, from the at least one candidate target cell, of a handover request acknowledgement.

The example non-transitory computer-readable medium may be further configured to: cause transmitting, to at least one of the one or more candidate target cells, of a respective cell deactivation indication, wherein the respective cell deactivation indication may comprise at least one of: an energy saving conditional handover information request, information about handover preparation for conditional handover, or a list of currently active user equipments to be offloaded to a respective candidate target cell of the one or more candidate target cells; and cause receiving, from the one or more candidate target cells, of a handover request acknowledgement.

The at least one of the one or more handover configurations may further comprise an indication of one or more measurements to perform.

The example non-transitory computer-readable medium may be further configured to: cause receiving, from the user equipment, of an indication of a result of at least one of the one or more measurements; determine a confidence that a target cell of the one or more candidate target cells will be selected at the user equipment for synchronization based, at least partially, on the indication of the result of the at least one of the one or more measurements; compare the determined confidence with a threshold; based on a determination that the determined confidence is greater than the threshold, cause indicating to the user equipment to: omit performance of the one or more measurements, and perform target cell selection based on at least one of: predetermined information that is associated with the target cell, or the information for target cell selection; and based on a determination that the determined confidence is less than or equal to the threshold, cause indicating to the user equipment to perform target cell selection based on performing the one or more measurements.

The information for target cell selection may comprise at least one of: a transmission configuration indicator state associated with a base station or a target cell, a reference signal received power value associated with the base station or the target cell, a downlink beam of the base station or the target cell, or selection criteria.

The energy saving mode may comprise at least one of: cell shutdown, network transmit power reduction, or multiple-in multiple-out transmit antenna element muting.

The indication of the one or more candidate target cells may be based, at least partially, on at least one of: one or more network shutdown policies, one or more frequency layers that are shut down, an order of shutdown of the one or more frequency layers that are shut down, or a frequency layer of a same power saving group as at least one of the one or more frequency layers that are shut down.

The example non-transitory computer-readable medium may be further configured to: cause transmitting, to the user equipment, of an indication of when the one or more handover configurations are to be applied, wherein the indication may comprise at least one of: the indication of activation of the energy saving mode, a network offload indication, an indication of an activation of the one or more handover configurations, or an indication of a time for enforcement of the one or more handover configurations, which may comprise at least one of: a system frame number, a hyper frame number, or a number of time units.

The network offload indication or the indication of an activation of the one or more handover configurations may comprise one of: downlink control information, or a medium access control control element.

In accordance with another example embodiment, a non-transitory program storage device readable by a machine may be provided, tangibly embodying a program of instructions executable by the machine for performing operations, the operations comprising: determine to activate an energy saving mode; generate one or more handover configurations, wherein the one or more handover configurations may comprise an energy saving conditional handover configuration, wherein at least one of the one or more handover configurations may comprise at least one of: an indication of one or more candidate target cells, or information for target cell selection; cause transmitting, to a user equipment, of the one or more handover configurations; initiate activation of the energy saving mode; and cause transmitting, to the user equipment, of an indication of activation of the energy saving mode.

In accordance with another example embodiment, a computer program may comprise instructions stored thereon for performing at least the following: receiving, from a serving cell, one or more handover configurations, wherein the one or more handover configurations may comprise an energy saving conditional handover configuration, wherein at least one of the one or more handover configurations may comprise at least one of: an indication of one or more candidate target cells, or information for target cell selection; receiving, from the serving cell, an indication of activation of an energy saving mode at the serving cell; and selecting a target cell, from the one or more candidate target cells, based, at least partially, on the one or more handover configurations and the received indication of activation of the energy saving mode at the serving cell.

In accordance with another example embodiment, a computer program may comprise instructions stored thereon for performing at least the following: determining to activate an energy saving mode; generating one or more handover configurations, wherein the one or more handover configurations may comprise an energy saving conditional handover configuration, wherein at least one of the one or more handover configurations may comprise at least one of: an indication of one or more candidate target cells, or information for target cell selection; transmitting, to a user equipment, the one or more handover configurations; initiating activation of the energy saving mode; and transmitting, to the user equipment, an indication of activation of the energy saving mode.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising:
at least one processor; and
at least one memory including computer program code;
the at least one memory and the computer program code configured to, with the at least one processor, cause the apparatus at least to:
receive, from a serving cell, one or more handover configurations, wherein the one or more handover configurations comprises an energy saving conditional handover configuration, wherein at least one of the one or more handover configurations comprises at least one of:
an indication of one or more candidate target cells, or
information for target cell selection;
receive, from the serving cell, an indication of activation of an energy saving mode at the serving cell; and
select a target cell, from the one or more candidate target cells, based, at least partially, on the one or more handover configurations and the received indication of activation of the energy saving mode at the serving cell.

2. The apparatus of claim 1, wherein the indication of activation of the energy saving mode is included in a broadcast message.

3. The apparatus of claim 1 or 2, wherein the at least one memory and the computer program code are configured to, with the at least one processor, cause the apparatus to:
disconnect from the serving cell; and
synchronize with the selected target cell.

4. The apparatus of any of claims 1 through 3, wherein the at least one of the one or more handover configurations further comprises an indication of one or more measurements to perform.

5. The apparatus of claim 4, wherein the at least one memory and the computer program code are configured to, with the at least one processor, cause the apparatus to:
perform at least one of the one or more measurements; and
select the target cell based, at least partially, on a result of the at least one performed measurement.

6. The apparatus of any of claims 1 through 4, wherein selecting the target cell comprises the at least one memory and the computer program code are configured to, with the at least one processor, cause the apparatus to:
select the target cell based, at least partially, on one of:
predetermined information, located at the apparatus, that is associated with the target cell, or
the information for target cell selection, comprising at least one of:
a transmission configuration indicator state associated with the serving cell or the target cell,
a reference signal received power value associated with the serving cell or the target cell,
a downlink beam of the serving cell or the target cell, or
selection criteria.

7. The apparatus of any of claims 1 through 6, wherein the apparatus is in a radio resource control connected state.

8. The apparatus of any of claims 1 through 7, wherein the indication of activation of the energy saving mode at the serving cell comprises an indication of at least one of:
cell shutdown,
network transmit power reduction, or
multiple-in multiple-out transmit antenna element muting.

9. The apparatus of any of claims 1 through 8, wherein the indication of the one or more candidate target cells is based, at least partially, on at least one of:
one or more network shutdown policies of the serving cell,
one or more frequency layers of the serving cell that are shut down,
an order of shutdown of the one or more frequency layers of the serving cell that are shut down, or
a frequency layer of a same power saving group as at least one of the one or more frequency layers of the serving cell that are shut down.

10. The apparatus of any of claims 1 through 9, wherein the at least one memory and the computer program code are configured to, with the at least one processor, cause the apparatus to:
select an energy saving conditional handover configuration of the one or more handover configurations based, at least partially, on the indication of activation of the energy save mode at the serving cell, wherein selecting the target cell is further based on the selected energy saving conditional handover configuration.

11. The apparatus of any of claims 1 through 10, wherein the at least one memory and the computer program code are configured to, with the at least one processor, cause the apparatus to:
receive an indication of when the one or more handover configurations are to be applied, wherein the indication comprises at least one of:
the indication of activation of the energy saving mode at the serving cell,
a network offload indication,
an indication of an activation of the one or more handover configurations, or
an indication of a time for enforcement of the one or more handover configurations, comprising at least one of:
a system frame number,
a hyper frame number, or
a number of time units.

12. The apparatus of claim 11, wherein the network offload indication or the indication of an activation of the one or more handover configurations comprises one of:
downlink control information, or
a medium access control control element.

13. A method comprising:
receiving, with a user equipment from a serving cell, one or more handover configurations, wherein the one or more handover configurations comprises an energy saving conditional handover configuration, wherein at least one of the one or more handover configurations comprises at least one of:
an indication of one or more candidate target cells, or
information for target cell selection;
receiving, from the serving cell, an indication of activation of an energy saving mode at the serving cell; and
selecting a target cell, from the one or more candidate target cells, based, at least partially, on the one or more handover configurations and the received indication of activation of the energy saving mode at the serving cell.

14. An apparatus comprising means for performing:
receiving, from a serving cell, one or more handover configurations, wherein the one or more handover configurations comprises an energy saving conditional handover configuration, wherein at least one of the one or more handover configurations comprises at least one of:
an indication of one or more candidate target cells, or
information for target cell selection;
receiving, from the serving cell, an indication of activation of an energy saving mode at the serving cell; and
selecting a target cell, from the one or more candidate target cells, based, at least partially, on the one or more handover configurations and the received indication of activation of the energy saving mode at the serving cell.

15. A non-transitory computer-readable medium comprising program instructions stored thereon which, when executed with at least one processor, cause the at least one processor to:
cause receiving, from a serving cell, of one or more handover configurations, wherein the one or more handover configurations comprises an energy saving conditional handover configuration, wherein at least one of the one or more handover configurations comprises at least one of:
an indication of one or more candidate target cells, or
information for target cell selection;
cause receiving, from the serving cell, of an indication of activation of an energy saving mode at the serving cell; and
select a target cell, from the one or more candidate target cells, based, at least partially, on the one or more handover configurations and the received indication of activation of the energy saving mode at the serving cell.
